# EUROPÄISCHE PATENTSCHRIFT

(11) **EP 3 578 791 B1**
(45) Veröffentlichungstag und Bekanntmachung des Hinweises auf die Patenterteilung: **12.10.2022**
(21) Anmeldenummer: 19175853.1
(22) Anmeldetag: 22.05.2019
(51) Int. Cl.: F02K 9/18, F02K 9/26, F02K 9/28

(54) **VERFAHREN ZUM ZWEISTUFIGEN ABBRENNEN EINES FESTBRENNSTOFF-RAKETENMOTORS SOWIE FESTBRENNSTOFF-RAKETENMOTOR**
METHOD FOR TWO-STEP COMBUSTION OF A SOLID FUEL ROCKET ENGINE AND SOLID FUEL ROCKET ENGINE
PROCÉDÉ DE BRÛLURE À DEUX ÉTAGES D'UN MOTEUR-FUSÉE À COMBUSTIBLE SOLIDE ET UN TEL MOTEUR-FUSÉE À COMBUSTIBLE SOLIDE

(30) Priorität: 05.06.2018 DE 102018004447; 07.08.2018 DE 102018006228
(43) Veröffentlichungstag der Anmeldung: 11.12.2019
(73) Patentinhaber: Diehl Defence GmbH & Co. KG, 88662 Überlingen (DE)
(72) Erfinder: Fisch, Peter Gerd, 88662 Überlingen (DE)
(74) Vertreter: Diehl Patentabteilung

(56) Entgegenhaltungen:
- EP-A2- 2 503 135
- DE-A1- 3 637 967
- DE-C1- 19 508 830
- FR-A- 1 265 327
- US-A- 2 724 237
- US-A- 5 070 691

## Beschreibung

Die Erfindung betrifft ein Verfahren zum zweistufigen Abbrennen eines Festbrennstoff-Raketenmotors, bei dem Festbrennstoff einer ersten Stufe in einer ersten Teilkammer einer Brennkammer mit einer ersten Zündeinheit gezündet wird und dann Festbrennstoff einer zweiten Stufe in einer zweiten Teilkammer der Brennkammer mit einer zweiten Zündeinheit gezündet wird.

Schnell beschleunigende Flugkörper, wie raketengetriebene Flugkörper oder raketengetriebene Artilleriegeschosse, erreichen schnell eine sehr hohe Geschwindigkeit, mit der sie auf ihr Ziel zufliegen. Um die Reichweite solcher Flugkörper zu erhöhen, kann der Raketenmotor des Flugkörpers vergrößert werden. Hierbei besteht jedoch der Nachteil, dass die Energieverluste beim Flug des Flugkörpers durch die noch weiter erhöhte Geschwindigkeit erheblich zunehmen.

Um diesen Nachteil zu überwinden, ist es aus der EP 2 503 135 B1 bekannt, zweistufige Festbrennstoff-Raketenmotoren zu verwenden. Die Brennkammer ist in zwei Teilkammern unterteilt, sodass der Festbrennstoff der ersten Stufe in einer ersten Teilkammer und der Festbrennstoff der zweiten Stufe in einer zweiten Teilkammer untergebracht ist. Jede Stufe hat eine eigene Zündeinheit, durch die die jeweilige Stufe individuell und elektronisch gesteuert gezündet werden kann. Auf diese Weise kann der Flugkörper mit der ersten Stufe beschleunigt und zu einem zweiten späteren Zeitpunkt mit der zweiten Stufe erneut beschleunigt werden, sodass der Schub zeitlich besser verteilt auf den Flugkörper aufgebracht und dieser hierdurch reibungseffizienter und damit weiter fliegen kann. Die US 2 724 237 A offenbart ein Verfahren und einen Festbrennstoff-Raketenmotor entsprechend den Oberbegriffen von Patentanspruch 1 bzw. Patentanspruch 11.

Es ist eine Aufgabe der vorliegenden Erfindung, ein vereinfachtes Verfahren zum zweistufigen Abbrennen eines Festbrennstoff-Raketenmotors anzugeben.

Diese Aufgabe wird durch ein Verfahren gemäß den Merkmalen von Patentanspruch 1 gelöst, bei dem eine Verbrennung der ersten Stufe die zweite Zündeinheit zündet, die zweite Zündeinheit Festbrennstoff in einer umwandeten Durchbrandstrecke durchbrennt und dieser den Festbrennstoff der zweiten Stufe zündet.

Die Erfindung geht von der Überlegung aus, dass das Zünden von Festbrennstoff eines Raketenmotors generell ein sicherheitskritischer Vorgang ist, der hohen Sicherheitsanforderungen unterworfen ist. Durch das Vorhandensein von zwei Zündeinheiten mit einer jeweiligen elektronischen Steuerung ist der damit verbundene Sicherheitsaufwand nicht unerheblich. Da außerdem eine Zündung der zweiten Stufe bei noch Vorhandensein des Festbrennstoffs der ersten Stufe zu einer Explosion des Raketentriebwerks führen kann, sind besonders hohe Sicherheitsanforderungen an das Zünden der zweiten Zündeinheit zu stellen.

Wird durch eine Verbrennung der ersten Stufe die zweite Zündeinheit ebenfalls gezündet, das kann durch die Zündung der ersten Stufe direkt sein oder während einer späteren Abbrandphase der ersten Stufe erfolgen, so kann auf einen Mechanismus, durch den die zweite Zündeinheit separat zündbar ist, verzichtet werden. Die zweite Zündeinheit kann so ausgeführt sein, dass sie ausschließlich durch eine Feuerzündung zündbar ist. Auf eine elektronische oder mechanische Steuerung, die eine Zündung bewirkt, kann verzichtet werden. Andererseits kann die erfindungsgemäße zweite Zündeinheit elektronische und/oder mechanische Mittel aufweisen, die auf die zweite Zündeinheit einwirken, beispielsweise um den Zündzeitpunkt der zweiten Stufe nach vorne zu verlegen. Allerdings können diese Mittel nicht von sich aus die Zündung bewirken, sondern nur in einen Brennvorgang der bereits gezündeten zweiten Zündeinheit eingreifen. Auf diese Weise kann eine zuverlässige Zündung der zweiten Stufe mit einfachen Mitteln erreicht werden.

Erfolgt die Zündung der zweiten Zündeinheit unmittelbar durch die erste Zündeinheit, so zündet die erste Zündeinheit sowohl den Festbrennstoff der ersten Stufe als auch die zweite Zündeinheit bzw. deren Festbrennstoff unmittelbar. Bei einer Zündung durch den Festbrennstoff der ersten Stufe wird dieser durch die Zündeinheit der ersten Stufe gezündet und entzündet seinerseits die zweite Zündeinheit. Dies kann sofort nach der Zündung der ersten Stufe oder nach einer Verzögerung erfolgen, die durch das Abbrennverhalten der ersten Stufe bedingt sein kann.

Die zweite Zündeinheit zündet den Festbrennstoff der zweiten Stufe zweckmäßigerweise erst, nachdem der Abbrand der zweiten Zündeinheit die gesamte Durchbrandstrecke durchlaufen hat. Dieses Durchlaufen kann als Verzögerung der Zündung der zweiten Stufe nach Zündung der zweiten Zündeinheit verwendet werden. Zweckmäßigerweise zündet die zweite Stufe erst nach einem Ausbrand der ersten Stufe. Ein Ausbrand kann als dann eingetreten gelten, wenn der durch die erste Stufe bewirkte Schub des Raketenmotors auf weniger als 10 % seines Maximalschubs abgesunken ist, insbesondere auf weniger als 2 %. Die zweite Zündeinheit kann als passives Verzögerungsglied betrachtet werden, wobei die Verzögerung der Zündung der zweiten Stufe durch die Festbrennstoff gefüllte, umwandete Durchbrandstrecke bestimmt wird.

Es ist insofern vorteilhaft, wenn die zweite Zündeinheit brennt, während die erste Stufe bereits ausgebrannt und die zweite Stufe noch nicht gezündet ist. Analog zu einer Zündschnur kann die zweite Stufe gezündet werden, wenn die Durchbrandstrecke vollständig durchbrannt ist. Die Durchbrandstrecke kann an ihrem einen Ende mit dem Festbrennstoff der ersten Stufe und an dem anderen Ende mit Festbrennstoff der zweiten Stufe verbunden sein. Zu Beginn des Brennens der Durchbrandstrecke kann die erste Stufe noch in Brand sein, sodass sowohl die erste Stufe als auch die zweite Zündeinheit, also der Festbrennstoff in der eingehausten Durchbrandstrecke, brennt. Während des Durchbrennens der Durchbrandstrecke kann die erste Stufe erlöschen beziehungsweise ausbrennen.

Es ist einer großen Reichweite des Flugkörpers förderlich, wenn zwischen dem Ausbrand der ersten Stufe und dem Zünden der zweiten Stufe eine Wartezeit besteht, der Raketenmotor also keinen bzw. nur geringen Schub aufweist, der zweckmäßigerweise 10 % seines maximalen Schubs unterschreitet. Vorteilhafterweise beträgt die Wartezeit zumindest 50 %, zweckmäßigerweise zumindest das zweifache, insbesondere zumindest das fünffache der Schubdauer der ersten Stufe. Hierdurch kann der Schub der zweiten Stufe die schon deutlich abgesunkene Fluggeschwindigkeit des Flugkörpers noch einmal erheblich steigern und somit zu einer großen Reichweite beitragen.

Die Abgase aus dem Abbrennen der zweiten Zündeinheit, also dem Festbrennstoff der Durchbrandstrecke, gelangen zweckmäßigerweise in die erste Teilkammer und werden durch eine Düse am Heck des Flugkörpers bzw. Festbrennstoff-Raketenmotors ausgestoßen. Die Umwandung der Durchbrandstrecke liegt zweckmäßigerweise in der Brennkammer und kann durch einen Abbrand der zweiten Stufe verbrannt und/oder aus der Brennkammer durch die hintere Düse ausgeblasen werden. Das gleiche gilt zweckmäßigerweise auch für eine Trennwand zwischen der ersten und der zweiten Teilkammer.

Die Festbrennstoffe der ersten und der zweiten Stufe können identisch sein oder sich voneinander unterscheiden, um aufgrund unterschiedlicher Abbrandcharakteristiken unterschiedlich lange Brenndauern für die erste und die zweite Stufe zu erzielen.

Hinsichtlich eines Flugkörpers kann die Erfindung gerichtet sein auf ein Verfahren zum zweistufigen Antrieb eines Flugkörpers mit einem Festbrennstoff-Raketenmotor. Der Raketenmotor kann hierbei wie oben beschrieben abbrennen. Der Flugkörper kann ein raketengetriebener Flugkörper, beispielsweise ein Lenkflugkörper, sein. Auch ein Geschoss mit einem zusätzlichen Raketenantrieb, beispielsweise ein Artilleriegeschoss, ist denkbar. Dieses erfährt seinen Vorschub dann durch einen Abschuss aus einem Geschütz und die beiden Stufen des Festbrennstoff-Raketenmotors.

Während eines schubfreien Flugs eines raketengetriebenen Flugkörpers macht ein Heckwiderstand am hinteren Ende des Flugkörpers einen beträchtlichen Anteil der Abbremsung des Flugkörpers aus. Meist bremst der Heckwiderstand den Flugkörper sogar deutlich stärker als der Reibungswiderstand durch die Bewegung durch die Luft. Dieser Heckwiderstand kann erheblich verringert werden, wenn während des schubfreien Flugs Verbrennungsabgase aus dem Heck des Flugkörpers bzw. seines Festbrennstoff-Raketenmotors ausgeblasen werden. Diese füllen das während des Flugs hinter dem Flugkörper entstehende Unterdruckgebiet zumindest teilweise mit Abgas, sodass der Unterdruck verringert und hierdurch die Bremsung verkleinert werden kann. Diese Technik ist als sogenanntes Basebleed-Verfahren bekannt, bei dem während des schublosen Flugs ein Basebleed-Brennstoff in der Brennkammer verbrennt und für die Unterdruckverringerung am Heck des Festbrennstoff-Raketenmotors beziehungsweise des Flugkörpers sorgt. Ein solcher Effekt kann durch die zweite Zündeinheit erreicht werden.

Es ist insofern eine vorteilhafte Ausführungsform der Erfindung darauf gerichtet, dass Abgase der Verbrennung des Festbrennstoffs der zweiten Zündeinheit als Basebleed-Strom am Heck des Raketenmotors ausgeblasen werden. Das Abbremsen des Flugs während einer schubfreien Flugphase zwischen der ersten und der zweiten Stufe kann verringert und die Reichweite des Flugkörpers kann vergrößert werden.

Zwischen den beiden Teilkammern ist zweckmäßigerweise eine Trennwand angeordnet, die ein Überspringen der Verbrennung von der ersten Stufe auf die zweite Stufe verhindert. Die zweite Zündeinheit ist zweckmäßigerweise aus Sicht der ersten Teilkammer hinter der Trennwand angeordnet. Um eine Zündung der zweiten Zündeinheit durch die Verbrennung des Festbrennstoffs der ersten Stufe zu erreichen, ist es vorteilhaft, wenn die Trennwand eine Öffnung aufweist, durch die das Verbrennungsfeuer der ersten Stufe die zweite Zündeinheit erreichen kann. Es ist insofern vorteilhaft, wenn zwischen den beiden Teilkammern eine Trennwand mit einer Öffnung angeordnet ist, durch die der Festbrennstoff der ersten Stufe den Festbrennstoff der zweiten Zündeinheit zündet.

Während beim Abbrand der ersten Stufe die Trennwand gegen die zweckmäßigerweise kompakte zweite Stufe gedrückt und von dieser gestützt wird, tritt beim Zünden der zweiten Stufe eine Kraftumkehr auf die Trennwand auf. Die zweite Stufe drückt gegen die Trennwand, die durch die verbrannte erste Stufe nun keinen Widerhalt in Richtung zur ersten Stufe mehr findet und hierdurch beispielsweise aufplatzen und ausgestoßen werden kann oder in einer anderen Weise geöffnet wird, sodass die Abgase der zweiten Stufe durch die Trennwand hindurchtreten können beziehungsweise durch den Raum, der zuvor von der Trennwand eingenommen wurde.

Beim Zünden eines Raketenmotors beziehungsweise einer Stufe eines Raketenmotors bedarf es eines gewissen Freiraums, durch die die Zündflammen eine möglichst große Oberfläche des Festbrennstoffs erreichen können, sodass dieser über diese gesamte Oberfläche brennt. Auf der anderen Seite ist es hinsichtlich einer Stabilität der zweiten Stufe vorteilhaft, wenn diese kompakt aufgebaut ist, da hierdurch einer ungewünschten Überzündung von der ersten Stufe in die zweite Stufe durch einen Hohlraum entgegengewirkt werden kann. Weiter ist es notwendig, dass beim Zünden der zweiten Stufe ein Freiraum vorhanden ist, durch den die Abgase der Verbrennung der zweiten Stufe austreten können, zweckmäßigerweise in die erste Teilkammer. Ein kompakter und sicherer Aufbau des Raketenmotors kann erreicht werden, wenn die zweite Zündeinheit einen Raum einnimmt, durch den nach Verbrennen der zweiten Zündeinheit beziehungsweise deren Festbrennstoff die Abgase aus der Verbrennung der zweiten Stufe ausgestoßen werden können.

Es ist weiter zweckmäßig, wenn die zweite Zündeinheit so zum Festbrennstoff der zweiten Stufe angeordnet ist, dass sie durch ihren Abbrand eine Ausstoßöffnung für Abgase des Festbrennstoffs der zweiten Stufe freigibt. Oder anders ausgedrückt: Es ist entsprechend der Erfindung vorgesehen, dass Abgase der Verbrennung des Festbrennstoffs der zweiten Stufe durch eine Öffnung blasen, die der Festbrennstoff der zweiten Zündeinheit durch seine Verbrennung freigegeben hat.

Einem kompakten Aufbau der zweiten Stufe ist es ebenfalls dienlich, wenn die zweite Zündeinheit zentral im Festbrennstoff der zweiten Stufe angeordnet ist. Die zweite Stufe kann ihr Abgas durch die frei gewordene zentrale Lage der abgebrannten zweiten Zündeinheit ausstoßen beziehungsweise radial von innen nach außen ausbrennen, sodass ein geeignetes Verbrennen der zweiten Stufe in einfacher Weise erfolgen kann.

Die Zündung der zweiten Stufe erfolgt zweckmäßigerweise von vorne, also an der der ersten Stufe gegenüberliegenden Seite der zweiten Stufe. Die eingehauste Durchbrandstrecke kann hierbei durch die zweite Stufe beziehungsweise deren Festbrennstoff hindurchverlaufen, zweckmäßigerweise in Axialrichtung, insbesondere in radial zentrierter Lage.

Die zweite Zündeinheit mündet zweckmäßigerweise in einen Freiraum innerhalb der ersten Stufe beziehungsweise der ersten Teilkammer der Brennkammer, der bei einem Zünden der ersten Stufe sofort mit Feuer gefüllt ist. Die zweite Zündeinheit zündet spontan mit der ersten Stufe, wobei die Verzögerungszeit zwischen dem Zünden der ersten und der zweiten Stufe durch die Abbranddauer der zweiten Zündeinheit vorgegeben sein kann. Dies kann die Durchbrenndauer durch die Durchbrandstrecke sein. Es ist insofern vorteilhaft, wenn die zweite Zündeinheit bei Beginn des Abbrands der ersten Stufe gezündet wird.

Eine weitere vorteilhafte Ausführungsform der Erfindung sieht vor, dass die zweite Zündeinheit so mit dem Festbrennstoff der ersten Stufe verbunden ist, dass sie erst nach Ablauf einer Brenndauer der ersten Stufe gezündet wird. Die Brenndauer kann vorbestimmt sein.

Eine solche Verzögerung kann erreicht werden, wenn die zweite Zündeinheit vollständig in Festbrennstoff der ersten Stufe mündet. Vom oben beschriebenen Freiraum ist sie zweckmäßigerweise durch Festbrennstoff der ersten Stufe getrennt. Die zweite Zündeinheit zündet also erst dann, wenn der Festbrennstoff der ersten Stufe bereits teilweise verbrannt ist und die Brennzone zur zweiten Zündeinheit gelangt.

Hierzu sind mehrere Geometrien sinnvoll, die einzeln oder in Kombination miteinander angewandt werden können. Eine Möglichkeit besteht darin, die zweite Zündeinheit außerhalb der zentralen Achse der Brennkammer anzuordnen. Bei einer radial weiter außerhalb liegenden Anordnung dauert es eine Weile, bis der radial mittig gezündete Festbrennstoff der ersten Stufe sich soweit nach radial außen aufgebrannt hat, dass die Flammen die zweite Zündeinheit erreichen.

Eine zweite Möglichkeit besteht darin, am axial vorderen Ende der ersten Teilkammer einen Festbrennstoffbereich anzuordnen, der frei von einer zentralen Zündöffnung ist. Die Verbrennungsfront wandert während des Brennens der ersten Stufe in diesem vorderen Festbrennstoffbereich in Axialrichtung nach vorne und erreicht erst nach einer gewissen Verbrennungsdauer die zweite Zündeinheit beziehungsweise die Trennwand zwischen den beiden Teilkammern. Erst nach dieser Verzögerung wird die zweite Zündeinheit gezündet.

In anderen Worten: Es kann sinnvoll sein, wenn die erste Stufe an ihrer Vorderseite eine Verzögerungspartition aufweist, die noch abbrennt, beispielsweise in Axialrichtung, während ein radialer Abbrand der ersten Stufe bereits beendet ist.

Es ist bei einer solchen Ausführungsform auch möglich, auf die zweite verzögernde Zündeinheit zu verzichten, wenn die Verzögerungspartition bereits in ihrer Verzögerung ausreicht. Insofern kann eine Verzögerungspartition, die aus dem gleichen Festbrennstoff besteht, wie der für den Hauptschub verantwortliche Festbrennstoff der ersten Stufe, bereits als zweite Zündeinheit angesehen werden, da sie ebenfalls zu einer Verzögerung der Zündung der zweiten Stufe führt. Je nach Abbrandfläche bei einem Brennen der Verzögerungspartition kann ein Basebleed-Abgasstrom in gewünschter Weise eingestellt werden. Die Verzögerungspartition kann jedoch auch eine zusätzliche Verzögerungsstufe sein, die also eine zur zweiten Zündeinheit zusätzliche Verzögerung bewirkt.

Um einen axialen Abbrand der Verzögerungspartition aufrecht zu erhalten, während ein radialer Abbrand der ersten Stufe bereits beendet ist, ist es vorteilhaft, wenn die axiale Dicke des Festbrennstoffs in der Verzögerungspartition größer ist als die radiale Dicke des Festbrennstoffs der ersten Stufe. Als Dicken können hierbei Abbrandstrecken gesehen werden, wobei eine Einbuchtung eine solche Abbrandstrecke selbstverständlich verringert.

Je nach Einsatz des raketenmotorgetriebenen Flugkörpers kann es vorkommen, dass es sinnvoll ist, die zweite Stufe früher oder später zu zünden. Um hierfür keine baulichen Veränderungen der Festbrennstoffe des Raketenmotors nötig zu machen, ist es vorteilhaft, wenn der Zündzeitpunkt der zweiten Stufe steuerbar ist. Dies kann beispielsweise durch einen Aktuator geschehen, durch den der Zündzeitpunkt der zweiten Stufe gesteuert wird. Hierzu ist es sinnvoll, wenn die zweite Zündeinheit durch eine Aktion des Aktuators modifiziert wird. Eine solche Modifikation kann durch eine Veränderung der Abbrandgeschwindigkeit des Festbrennstoffs der zweiten Zündeinheit erfolgen. Ebenfalls möglich ist das Schaffen eines Bypass, der Festbrennstoff der zweiten Zündeinheit überbrückt, und/oder eines Bypass vom Festbrennstoff der zweiten Zündeinheit direkt zum Festbrennstoff der zweiten Stufe.

Konkret kann eine solche Modifikation dadurch erreicht werden, wenn ein Aktuator eine Wandung um den Festbrennstoff der zweiten Zündeinheit öffnet. Die Wandung der Durchbrandstrecke kann hierdurch durchlässig werden für die Verbrennung, die auf diese Weise schneller als bei einer vollständigen Durchbrennung der Durchbrandstrecke auf die zweite Stufe überspringen kann. Der Festbrennstoff der zweiten Stufe kann durch diese Öffnung von der zweiten Zündeinheit gezündet werden. Die Öffnung kann vor oder während des Abbrennens des Festbrennstoffs der zweiten Zündeinheit in die Wandung eingebracht werden. Dies ist im Wesentlichen von der Lage der Öffnung in der Wandung abhängig.

Die Öffnung kann durch eine partielle Zerstörung der Wandung erfolgen. Beispielsweise kann der Aktuator einen Dorn in die Wandung treiben und hierdurch die Öffnung erzeugen, durch die die Verbrennung von der zweiten Zündeinheit verkürzt wird oder unmittelbar zur zweiten Stufe überspringen kann. Eine andere Möglichkeit besteht darin, dass die Öffnung durch eine Verschiebung der Wandung erzeugt wird. Beispielsweise kann die Wandung vom Aktuator zurückgezogen werden, zweckmäßigerweise nach vorne in Bezug auf die Ausrichtung des Raketenmotors, sodass am hinteren Ende der Wandung - oder an einer anderen Stelle - die Öffnung erzeugt wird. Liegt die Öffnung am hinteren Ende der Wandung, besteht der Vorteil, dass die zweite Stufe sofort nach Verschieben der Wandung gezündet wird. Der Zündzeitpunkt der zweiten Stufe kann hierdurch sehr exakt eingestellt werden.

Die Erfindung ist außerdem gerichtet auf einen Festbrennstoff-Raketenmotor gemäß den Merkmalen von Patentanspruch 11 mit einer Brennkammer, die eine erste Teilkammer einer ersten Stufe und eine zweite Teilkammer einer zweiten Stufe aufweist, die durch eine Trennwand voneinander getrennt sind. Der Raketenmotor weist außerdem eine erste Zündeinheit zum Zünden des Festbrennstoffs der ersten Stufe und eine zweite Zündeinheit zum Zünden des Festbrennstoffs der zweiten Stufe auf.

Um ein einfaches zweistufiges Abbrennen des Raketenmotors zu erreichen, weist die zweite Zündeinheit eine umwandete Durchbrandstrecke auf, beispielsweise von der ersten zur zweiten Teilkammer beziehungsweise von der ersten zur zweiten Stufe auf. Die Durchbrandstrecke enthält einen Festbrennstoff. Dieser ist vorteilhafterweise so ausgeführt, dass er den Festbrennstoff der zweiten Stufe erst nach einer Wartezeit nach Ausbrand der ersten Stufe zündet.

Ebenfalls ist die Erfindung gerichtet auf einen Flugkörper mit einem solchen Festbrennstoff-Raketenmotor.

Wie bereits beschrieben, ist es vorteilhaft, wenn die zweite Zündeinheit einen Basebleed-Treibsatz als Verbindung zwischen den beiden Stufen aufweist. Die zweite Zündeinheit kann als Basebleed-Treibsatz ausgeführt sein.

Hinsichtlich der Anordnung der beiden Stufen zueinander bestehen mehrere Möglichkeiten. Eine erste vorteilhafte Variante sieht vor, dass die zweite Stufe in Axialrichtung vor der ersten Stufe angeordnet ist, zweckmäßigerweise vollständig vor der ersten Stufe. Es kann hierdurch ein besonders schlanker Raketenmotor erreicht werden. Möglich ist auch, dass die zweite Stufe zumindest teilweise radial um die erste Stufe herumgeführt ist, was eine axial kurze Bauform des Raketenmotors begünstigt. Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: einen Flugkörper mit einem zweistufigen Festbrennstoff-Raketenmotor in einer schematisierten Schnittdarstellung,
- FIG 2: das Heck des Flugkörpers aus FIG 1 bei aktiver erster Stufe,
- FIG 3: das Heck des Flugkörpers bei ausgebrannter erster Stufe im Basebleed-Zustand,
- FIG 4: das Heck des Flugkörpers bei gezündeter zweiter Stufe,
- FIG 5: einen zweistufigen Festbrennstoff-Raketenmotor mit einer Verzögerungspartition in der ersten Stufe,
- FIG 6: die bis auf die Verzögerungspartition ausgebrannte erste Stufe,
- FIG 7: eine erste Stufe mit einer Verzögerungspartition, die die zweite Zündeinheit zur Zündung der zweiten Stufe bildet,
- FIG 8: einen zweistufigen Festbrennstoff-Raketenmotor mit einer zweiten Zündeinheit, deren Öffnung vollständig in Festbrennstoff der ersten Stufe liegt,
- FIG 9: zwei radial ineinander angeordnete Stufen eines weiteren Festbrennstoff-Raketenmotors,
- FIG 10: einen zweistufigen Festbrennstoff-Raketenmotor mit einem mechanischen Aktuator zum Steuern des Zündens der zweiten Stufe,
- FIG 11: den Raketenmotor aus FIG 10 beim Zünden der zweiten Stufe und
- FIG 12: einen weiteren zweistufigen Festbrennstoff-Raketenmotor mit einem Aktuator zum Zünden der zweiten Stufe im Zündmoment der zweiten Stufe.

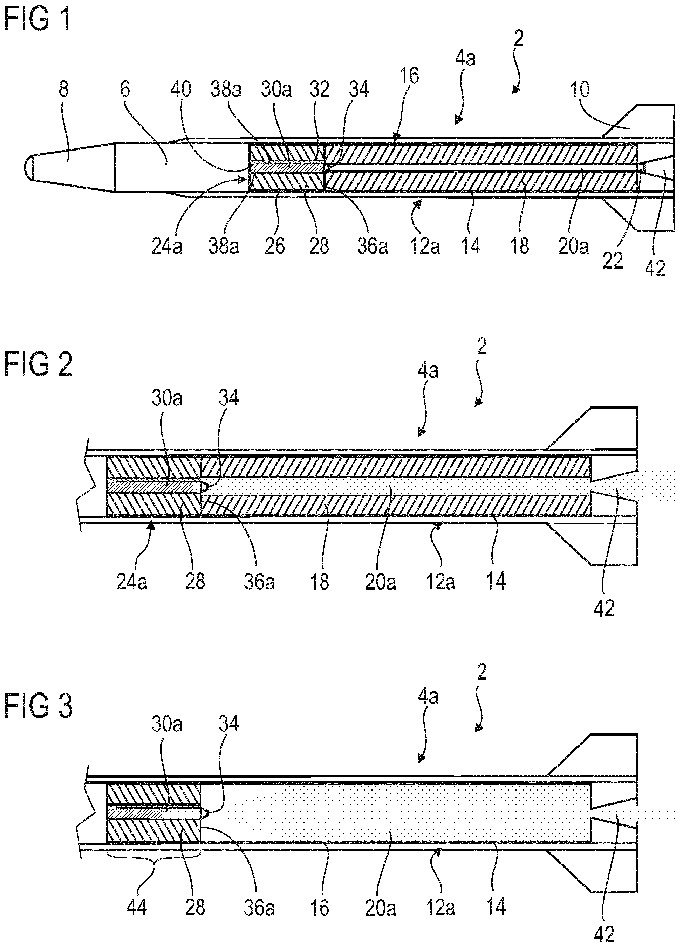

FIG 1 zeigt einen Flugkörper 2 mit einem zweistufigen Festbrennstoff-Raketenmotor 4a. Der Flugkörper 2 ist ein raketenmotorunterstütztes Artilleriegeschoss und weist in seinem vorderen Bereich einen Wirkkörper 6 und eine Steuereinheit 8 vor dem Wirkkörper 6 auf. Die Steuereinheit 8 kann einen Suchkopf, eine GPS-Steuerung oder eine andere Steuerung zum Lenken des Flugkörpers 2 zu einem Ziel mithilfe der Lenkflügel 10 aufweisen, die von der Steuereinheit 8 angesteuert werden.

Der zweistufige Raketenmotor 4 umfasst eine erste Stufe 12a in einer ersten Teilkammer 14 einer Brennkammer 16 des Raketenmotors 4a. In dieser ersten Teilkammer 14 ist Festbrennstoff 18 angeordnet mit einem radialzentrierten Freiraum 20a zum großflächigen Zünden des Festbrennstoffs 18 durch eine erste Zündeinheit 22. Der Freiraum 20a kann sich auch in mehreren Ausbuchtungen nach radial außen erstrecken, um die Zünd- beziehungsweise Abbrandfläche der ersten Stufe 12a zu erhöhen. Solche Ausbuchtungen sind in den Figuren der Übersichtlichkeit halber nicht dargestellt.

Die zweite Stufe 24a umfasst ebenfalls eine Teilkammer 26 der Brennkammer 16, in der Festbrennstoff 28 der zweiten Stufe 24a gelagert ist. Die Festbrennstoffe 18, 28 können gleich oder unterschiedlich sein, um einen optimalen Schub des Raketenmotors 4a in beiden Stufen 12a, 24a zu erreichen.

Innerhalb der zweiten Stufe 24a ist eine zweite Zündeinheit 30a angeordnet. Diese enthält ebenfalls Festbrennstoff, der auf seiner hinteren Seite von der ersten Stufe 12a zugänglich ist. Nach vorne hin ist er mit dem Festbrennstoff 28 der zweiten Stufe 24a verbunden beziehungsweise durch ihn zugänglich. Alternativ oder zusätzlich kann er unmittelbar an Zündbrennstoff 32 angrenzen, der schneller durchbrennt als der Festbrennstoff 28 der zweiten Stufe 24a und somit den Festbrennstoff 28 zügig und großflächig entzündet. Am Ausblasende der zweiten Zündeinheit 30a kann eine Düse 34 angeordnet sein zum Aufrechterhalten eines Abgasdrucks im Bereich der zweiten Zündeinheit 30a, wenn diese gezündet hat.

Zwischen den beiden Stufen 12a, 24a ist eine Trennwand 36a angeordnet, die ein Überzünden des Abbrandfeuers von der ersten Stufe 12a auf den Festbrennstoff 28 der zweiten Stufe 24a verhindert. Eine Wandung 38a um den Festbrennstoff der zweiten Zündeinheit 30a dient analog zum Verhindern eines Durchzündens des brennenden Festbrennstoffs der zweiten Zündeinheit 30a auf die zweite Stufe 24a, sodass ein Überzünden nur im vorderen Bereich stattfinden kann, in der die Wandung 38a eine Öffnung 40 enthält, durch die die Überzündung auf den Festbrennstoff 28 der zweiten Stufe 24a beziehungsweise den Zündbrennstoff 32 erfolgt, der ein Teil der zweiten Zündeinheit 30a oder der zweiten Stufe 24a sein kann.

Zum Steuern des Flugkörpers 2 auf ein Ziel wird dieser aus einem Geschütz detonativ ausgeschossen, wobei der Raketenmotor 4a hernach gezündet wird. Oder der Flugkörper 2 wird aus einem Kanister mithilfe des Raketenmotors 4a gestartet. Die erste Stufe 12a wird hierbei durch die erste Zündeinheit 22 gezündet, die in FIG 1 nur schematisch dargestellt ist. Sie wird beispielsweise von der Steuereinheit 8 oder extern durch einen Mechanismus im Geschütz beziehungsweise Kanister gezündet. Durch die Zündung brennt der Festbrennstoff 18 angrenzend zum gesamten Freiraum 20a an und die Verbrennungsabgase werden durch die Heckdüse 42 des Flugkörpers 2 nach hinten ausgestoßen. Dies ist in FIG 2 dargestellt.

FIG 2 zeigt den hinteren Bereich des Flugkörpers 2 aus FIG 1 in einem Zustand, in dem die erste Stufe 12a brennt. Die Verbrennung beziehungsweise Abgase sind in den Figuren gepunktet dargestellt. Zu sehen ist, dass der Freiraum 20a durch ein teilweises Verbrennen des Festbrennstoffs 28 sich nach radial außen etwas ausgeweitet hat. Der Festbrennstoff 28 brennt von innen nach außen, bis er vollständig aufgebrannt ist. Die Trennwand 36a verhindert, dass eine Überzündung von der ersten Stufe 12a zur zweiten Stufe 24a stattfindet.

Wie jedoch in FIG 2 angedeutet ist, zündet der Abbrand der ersten Stufe 12a die zweite Zündeinheit 30a des Raketenmotors 4a. Die Flammen aus der ersten Stufe 12a erreichen unmittelbar nach dem Zünden der ersten Stufe 12a den Festbrennstoff 28 der zweiten Zündeinheit 30a, beispielsweise durch die Düse 34 hindurch, sodass die zweite Zündeinheit 30a zündet. Deren Festbrennstoff 28 ist jedoch so ausgeführt, dass es eine - gegebenenfalls außentemperaturabhängige - vorbestimmte Durchbrennzeit dauert, bis die zweite Zündeinheit 30a von ihrem hinteren Ende zum vorderen Ende durchgebrannt ist, also durch die gesamte Durchbrandstrecke. Die zweite Zündeinheit 30a dient somit als eine Art Zündschnur zum Verzögern eines Zündens der zweiten Stufe 24a.

In FIG 2 ist zu sehen, wie ein Teil des Festbrennstoffs 28 in dieser Durchbrandstrecke bereits abgebrannt ist. Durch die gleichzeitige Zündung von erster Stufe 12a und zweiter Zündeinheit 30a brennen diese beiden Einheiten während der aktiven Zeit der ersten Stufe 12a gemeinsam. Der Flugkörper 2 beschleunigt angetrieben durch den Raketenmotor 4a, bis er eine Maximalgeschwindigkeit erreicht, die kurz vor oder beim Ausbrennen der ersten Stufe 12a erreicht wird.

FIG 3 zeigt diesen Zustand, in dem die erste Stufe 12a ausgebrannt ist. Der Festbrennstoff 28 der ersten Stufe 12a ist nicht mehr vorhanden und die erste Teilkammer 14 ist im Wesentlichen leer. Abgas des Basebleed-Treibsatzes der zweiten Zündeinheit 30a bläst in die erste Teilkammer 14 und von dort durch die Heckdüse 42 nach außen und verringert so den Sog hinter dem Flugkörper 2. Wie in FIG 3 zu erkennen ist, ist der Basebleed-Treibsatz der zweiten Zündeinheit 30a etwa zur Hälfte durchgebrannt, die Verbrennung der zweiten Zündeinheit 30a ist bis etwa zur Hälfte der Durchbrandstrecke 44 fortgeschritten, die vom vormals vorhandenen Festbrennstoff 18 der ersten Stufe 12a zum Festbrennstoff 28 der zweiten Stufe 24a reicht. In diesem Zustand ist die erste Stufe 12a ausgebrannt und der Flugkörper 2 fliegt antriebslos auf einer ballistischen Bahn.

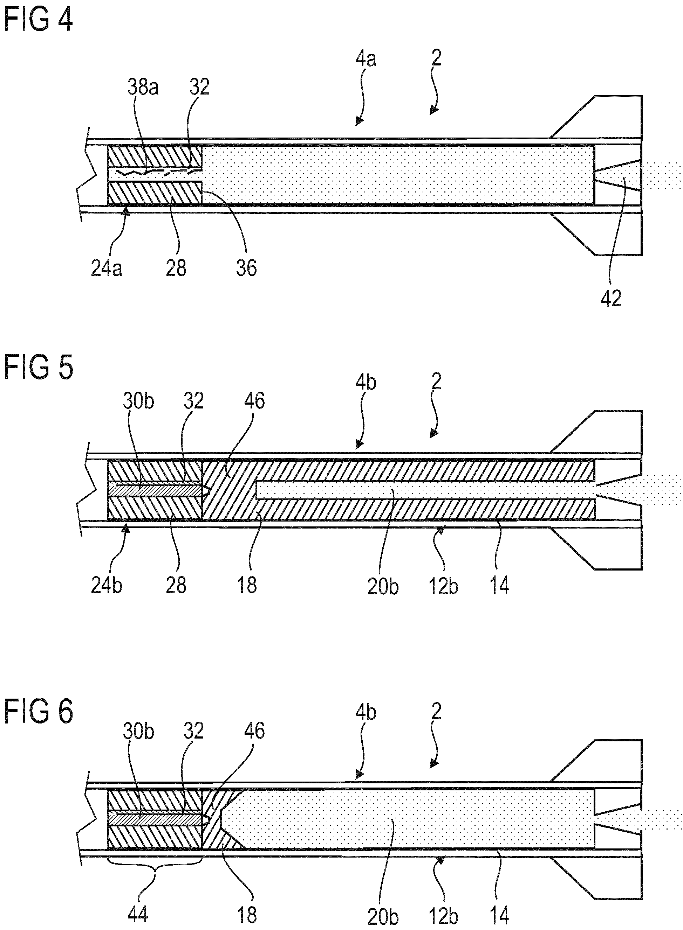

Erreicht die Abbrandfront der zweiten Zündeinheit 30a das Ende der Durchbrandstrecke 44, so zündet die zweite Zündeinheit 30a die zweite Stufe 24a. Dies ist in FIG 4 dargestellt.

FIG 4 zeigt den zweistufigen Raketenmotor 4a zum Zeitpunkt der Zündung der zweiten Stufe 24a. Der schnell brennende Zündbrennstoff 32 ist bereits entzündet und löst die Wandung 38a um den zuvor vorhandenen Festbrennstoff 28 der zweiten Zündeinheit 30a auf, wie in FIG 4 angedeutet ist. Auch die Teile der Trennwand 36, die nicht vom Festbrennstoff 28 der zweiten Stufe 24a gestützt werden, verbrennen oder werden in kleinen Teilen mit dem Abgas aus der Heckdüse 42 ausgeblasen. Der Festbrennstoff 28 der zweiten Stufe 24a brennt nach radial außen und bewirkt hierdurch einen zweiten Schub, der den Flugkörper 2 wieder beschleunigt.

FIG 5 zeigt einen Raketenmotor 4b mit einer leicht gegenüber dem vorhergehenden Ausführungsbeispiel modifizierten ersten Stufe 12b. Die nachfolgende Beschreibung beschränkt sich im Wesentlichen auf die Unterschiede zum jeweils vorangegangenen Ausführungsbeispiel, auf das bezüglich gleichbleibender Merkmale und Funktionen verwiesen wird. Um nicht bereits Beschriebenes mehrfach ausführen zu müssen, sind generell alle Merkmale eines vorangegangenen Ausführungsbeispiels im jeweils folgenden Ausführungsbeispiel übernommen, ohne dass sie erneut beschrieben sind, es sei denn, Merkmale sind als Unterschiede zu dem vorangegangenen Ausführungsbeispiel beschrieben.

Zum einfacheren Verständnis sind außerdem gleiche Bauteile in verschiedenen Ausführungsbeispielen mit den gleichen Bezugsziffern und anderen Bezugsbuchstaben bezeichnet, wobei sie identisch zueinander oder mit geringfügigen Unterschieden, zum Beispiel in Abmessung, Position, Form und/oder Funktion, zueinander sein können. Wird die Bezugsziffer alleine ohne einen Bezugsbuchstaben erwähnt, so sind die entsprechenden Bauteile aller Ausführungsbeispiele angesprochen.

Bei dem Ausführungsbeispiel aus FIG 5 ist der Festbrennstoff 18 der ersten Stufe 12b am vorderen Ende der ersten Stufe 12b mit einer Verzögerungspartition 46 versehen. Diese schließt das freie Ende des Festbrennstoffs der zweiten Zündeinheit 30b gasdicht vom Freiraum 20b der ersten Stufe 12b ab, innerhalb derer während des Abbrands der ersten Stufe 12b die Verbrennung stattfindet. Bei Zündung der ersten Stufe 12b erreicht die hierdurch erzeugte Flammenfront die zweite Zündeinheit 30b nicht, sodass eine Zündung der zweiten Zündeinheit 30b hierdurch um eine Verzögerungszeit, die die Verzögerungspartition 46 bewirkt, zeitlich nach hinten verschoben wird. Diese ist in der Darstellung aus FIG 6 zu sehen.

FIG 6 zeigt den Raketenmotor 4b in einem Stadium, in dem der radiale Abbrand des Festbrennstoffs 18 der ersten Stufe 12b abgeschlossen ist. Lediglich in der Verzögerungspartition 46 ist noch Festbrennstoff 18 vorhanden, der jedoch immer noch die Zündeinheit 30b von den Flammen in der hinteren Teilkammer 14 abschirmt. Erst wenn sich die Verbrennungsflammenfront nach vorne durch den Festbrennstoff 18 der Verzögerungspartition 46 durchgefressen hat und die Flammen die zweite Zündeinheit 30b erreichen, wird diese gezündet und beginnt mit dem Abbrand der Durchbrandstrecke 44, wobei der Flugkörper 2 während dieser Durchbrennzeit antriebslos im Basebleed-Modus auf seiner ballistischen Bahn fliegt.

Durch die Verzögerungspartition 46 beziehungsweise die Dicke von deren Festbrennstoff 18 zwischen dem Ende der zweiten Zündeinheit 30b und dem Freiraum 20b, kann eine zusätzliche Verzögerung eingestellt werden, während der Flugkörper 2 zumindest im Wesentlichen antriebslos nach dem Abbrand der ersten Stufe 12b in Richtung auf sein Ziel fliegt.

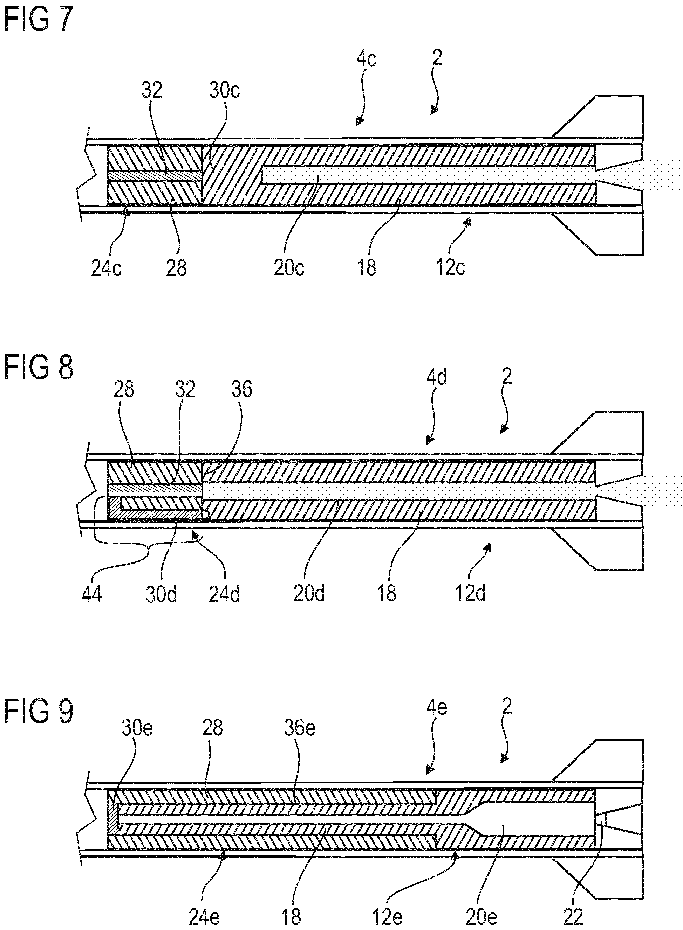

Bei dem Ausführungsbeispiel aus FIG 7 ist dieses Prinzip noch weiter ausgebildet. Der zuvor als Verzögerungspartition 46 beschriebene Abschnitt der ersten Stufe 12b bildet nun die zweite Zündeinheit 30c. An der Stelle des Festbrennstoffs 18 der Zündeinheiten 30 in den vorangegangenen Ausführungsbeispielen ist bei dem Ausführungsbeispiel aus FIG 7 schnell abbrennender Zündbrennstoff 32 platziert, der im Wesentlichen sofort durchzündet und den radial inneren Kern der zweiten Stufe 24c freigibt, beziehungsweise die zweite Stufe 24c sofort zündet. Die durch die zweite Zündeinheit 30c bewirkte Verzögerungszeit der Zündung der zweiten Stufe 24c nach Zündung der ersten Stufe 12c wird hierbei durch diejenige Dicke des Festbrennstoffs 18 der zweiten Zündeinheit 30c bewirkt, der nach dem radialen Ausbrennen der ersten Stufe 12c noch zwischen der zweiten Stufe 24c beziehungsweise deren Zündbrennstoff 32 und den dann schon stark ausgeweiteten Freiraum 20c bestehen bleibt.

Es ist deutlich, dass der Schub des Raketenmotors 4c in dem Stadium, zu dem die erste Stufe 12c ausgebrannt ist, also radial rundum die Brennkammerwandung erreicht hat, stärker ist, als die zuvor beschriebene Basebleed-Stärke. Je nach Ausführung der zweiten Zündeinheit 30 kann auf diese Weise ein Abgasausstoß in seiner Stärke in gewünschter Weise eingestellt werden.

Das Ausführungsbeispiel aus FIG 7 hat den Vorteil, dass auf eine Wandung 38, die beim Zünden der zweiten Stufe 24 abgebrannt beziehungsweise ausgestoßen werden müsste, verzichtet werden kann. Nachteilig ist jedoch die etwas größere Bauform des Raketenmotors 4c bei gleichem Schub im Vergleich zu dem Raketenmotor 4a.

Bei dem Ausführungsbeispiel aus FIG 8 kann die erste Stufe 12d zumindest im Wesentlichen ausgeführt sein wie im ersten Ausführungsbeispiel. Die zweite Zündeinheit 30d ist im Ausführungsbeispiel gemäß FIG 8 jedoch außermittig zur zentralen Längsachse des Raketenmotors 4d angeordnet. Wie beim Ausführungsbeispiel aus FIG 5 mündet die zweite Zündeinheit 30d nicht in den Freiraum 20d, sondern in den Festbrennstoff 18 der ersten Stufe 12d, sodass die zweite Zündeinheit 30d nicht mit der Zündung der ersten Stufe 12d gezündet wird, sondern mit einer Verzögerungszeit, die abhängig ist von der Dicke des Festbrennstoffs 18 zwischen der Zündeinheit 30d und dem Freiraum 20d in ungezündetem Zustand.

Wie aus FIG 8 zu sehen ist, entsteht hierdurch ein gleicher Verzögerungseffekt wie durch die Verzögerungspartition 46, jedoch ohne die Notwendigkeit von zusätzlichem axialen Bauraum durch eine Verzögerungspartition 46, wie beispielsweise im Ausführungsbeispiel aus FIG 5. Nach Zündung der Zündeinheit 30d verläuft die Abbrandfront entlang der Durchbrandstrecke 44, bis sie den zentralen Raum innerhalb des Festbrennstoffs 28 der zweiten Stufe 24d erreicht, der zweckmäßigerweise teilweise mit Zündbrennstoff 32 gefüllt ist, um der vorderen Trennwand 36 eine Stütze zu geben.

Das Ausführungsbeispiel aus FIG 9 zeigt einen Raketenmotor 4e mit zwei radial ineinander liegenden Stufen 12e, 24e. Die zweite Stufe 24e ist hierbei radial außerhalb eines vorderen Bereichs der ersten Stufe 12e angeordnet. Radial außerhalb der ersten Stufe 12e und innerhalb der zweiten Stufe 24e ist die Trennwand 36e angeordnet, diesmal in zylindrischer Form parallel zur Längsachse des Raketenmotors 4e. Im vorderen Bereich des Raketenmotors 4e ist die zweite Zündeinheit 30e angeordnet. Die Zündeinheit 30e verbindet den Festbrennstoff 18 der ersten Stufe 12e mit dem Festbrennstoff 28 der zweiten Stufe 24e. Das in die erste Stufe 12e hineinragende Ende der zweiten Zündeinheit 30e ist jedoch komplett innerhalb des Festbrennstoffs 18 der ersten Stufe 12e verborgen, sodass erste Stufe 12e und Zündeinheit 30e nicht zusammen zünden, sondern ein Verzögerungseffekt eintritt, wie zum Ausführungsbeispiel aus FIG 8 beschrieben ist.

Alternativ ist es möglich, den Freiraum 20e unmittelbar bis zum Festbrennstoff der Zündeinheit 30e reichen zu lassen, sodass Feuer im Freiraum 20e bei beziehungsweise nach Zündung der ersten Stufe 12e auch unmittelbar die zweite Zündeinheit 30e zündet. Je nach gewünschter Verzögerungszeit der zweiten Zündeinheit 30e ist deren Anzündende entsprechend im beziehungsweise am Freiraum 20e beziehungsweise vollständig innerhalb des Festbrennstoffs 18 der ersten Stufe 12e zu platzieren.

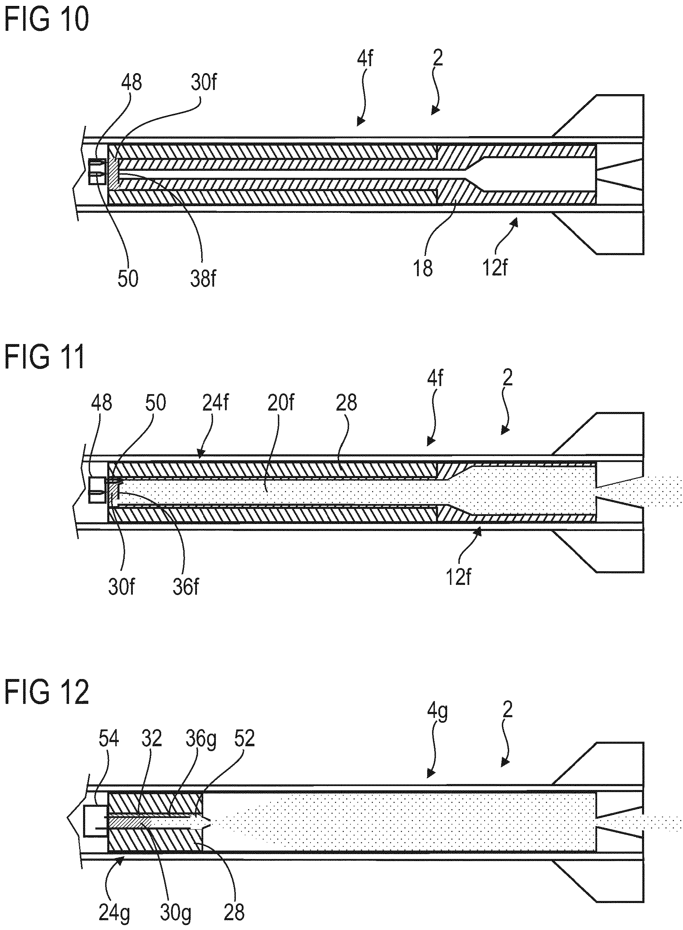

Das Ausführungsbeispiel aus FIG 10 gleicht demjenigen aus FIG 9 bis auf einen zusätzlichen Aktuator 48 an der zweiten Zündeinheit 30f des Raketenmotors 4f. Der Aktuator 48 wird durch die Steuereinheit 8 angesteuert und enthält einen nicht dargestellten Motor beziehungsweise Antrieb, der eine Bewegung eines Zündbeschleunigers 50 bewirkt. Beim Ausführungsbeispiel aus FIG 10 sind zwei Dornen jeweils als Zündbeschleuniger 50 vorhanden. Diese können vom Antrieb in die Zündeinheit 30f eingetrieben werden und die Trennwand 38f zwischen dem Festbrennstoff der Zündeinheit 30f und dem Festbrennstoff 18 der ersten Stufe 12f zerstören beziehungsweise mit einer Öffnung versehen. Dies ist beispielhaft in FIG 11 dargestellt.

FIG 11 zeigt den Raketenmotor 4f in einem Zustand, in dem die erste Stufe 12f schon weitgehend abgebrannt ist. Durch den Abbrand wurde ein direkter Kontakt mit dem Festbrennstoff der zweiten Zündeinheit 30f mit dem nun vergrößerten Freiraum 20f geschaffen, sodass die Zündeinheit 30f gezündet wurde, wie in FIG 11 angedeutet ist. Bis zur Zündung der zweiten Stufe 24f dauert es jedoch so lange, bis die Flammenfront der zweiten Zündeinheit 30f die Durchbrandstrecke durchschritten und den Festbrennstoff 28 der zweiten Stufe 24f erreicht hat.

Soll die zweite Stufe 24f schneller zünden, so kann der Zündzeitpunkt durch das Einbringen der Öffnung in die Wandung 36f beschleunigt werden. Bei dem Ausführungsbeispiel aus FIG 11 sind zwei Zündbeschleuniger 50 gezeigt, die jeweils unterschiedliche Zündbeschleunigungen bewirken. Öffnet der radial äußere Zündbeschleuniger 50 die Wandung 36f, wie in FIG 11 gezeigt ist, so zündet die zweite Stufe, sobald die Flammen der ersten Stufe die Öffnung erreichen, da diese unmittelbar am Festbrennstoff 28 der zweiten Stufe 24f liegt.

Öffnet der radial innere Zündbeschleuniger 50 die Wandung 36f, so wird der Festbrennstoff der zweiten Zündeinheit 30f sofort dort entzündet. Die Durchbrandstrecke wird verkürzt und ein Bypass wird geschaffen, der den ersten Teil der Durchbrandstrecke überbrückt. Würde in FIG 11 nicht der obere sondern der untere Zündbeschleuniger 50 die Öffnung einbringen, so würde die Durchbrandstrecke weniger verkürzt werden, als in FIG 11 zu sehen ist. Der Zündzeitpunkt der zweiten Stufe 24f kann so in gewünschter Weise eingestellt werden.

Eine andere Möglichkeit zum Einbringen einer Öffnung 52 in die Wandung 36g eines Raketenmotors 4g ist in FIG 12 dargestellt. Der Zündbeschleuniger des Aktuators 54 ist ein nicht dargestellter Antrieb, der die Wandung 36g nach vorne zieht, wie in FIG 12 zu sehen ist. Die Öffnung 52 kann als partielle Zerstörung der Wandung 36g gesehen werden, wie auch die Öffnung durch einen Zündbeschleuniger 50, beispielsweise wie in dem Ausführungsbeispiel aus FIG 11.

Zum Vergleich sei auf die Darstellung aus FIG 3 verwiesen, die den gleichen Abbrandzustand wie FIG 12 zeigt. Das Basebleed-Feuer der Zündeinheit 30g kann durch die Öffnung 52 nun direkt den Festbrennstoff 28 der zweiten Stufe 24g beziehungsweise den Zündbrennstoff 32 der zweiten Stufe 24g erreichen und diesen zünden. Die zweite Stufe 24g zündet und brennt ab, während der Festbrennstoff der zweiten Zündeinheit 30g weiter abbrennt.

Besonders zuverlässig kann hierdurch der Zündzeitpunkt der zweiten Stufe 24g bestimmt werden. Sobald der Aktuator 54 die Öffnung 52 in der Wandung 36g schafft, zündet die zweite Stufe 24g. Auf diese Weise kann die Zündung der zweiten Stufe 24g unmittelbar durch die Steuereinheit 8 angesteuert beziehungsweise betätigt werden.

### Bezugszeichenliste

- 2: Flugkörper
- 4a-g: Festbrennstoff-Raketenmotor
- 6: Wirkkörper
- 8: Steuereinheit
- 10: Lenkflügel
- 12a-f: erste Stufe
- 14: Teilkammer
- 16: Brennkammer
- 18: Festbrennstoff
- 20a-f: Freiraum
- 22: Zündeinheit
- 24a-g: zweite Stufe
- 26: Teilkammer
- 28: Festbrennstoff
- 30a-g: zweite Zündeinheit
- 32: Zündbrennstoff
- 34: Düse
- 36a-f: Trennwand
- 38a-g: Wandung
- 40: Öffnung
- 42: Heckdüse
- 44: Durchbrandstrecke
- 46: Verzögerungspartition
- 48: Aktuator
- 50: Zündbeschleuniger
- 52: Öffnung
- 54: Aktuator

## Patentansprüche

1. Verfahren zum zweistufigen Abbrennen eines Festbrennstoff-Raketenmotors (4ag), bei dem Festbrennstoff (18) einer ersten Stufe (12a-f) in einer ersten Teilkammer (14) einer Brennkammer (16) mit einer ersten Zündeinheit (22) gezündet wird und dann Festbrennstoff (28) einer zweiten Stufe (24a-g) in einer zweiten Teilkammer (26) der Brennkammer (16) mit einer zweiten Zündeinheit gezündet (30a-g) wird, eine Verbrennung der ersten Stufe (12a-f) die zweite Zündeinheit (30a-g) zündet, die zweite Zündeinheit (30a-g) Festbrennstoff in einer umwandeten Durchbrandstrecke (44) durchbrennt und dieser den Festbrennstoff der zweiten Stufe (24a-g) zündet,
**dadurch gekennzeichnet,**
**dass** Abgase der Verbrennung des Festbrennstoffs (28) der zweiten Stufe (24a-g) durch eine Öffnung blasen, die der Festbrennstoff (28) der zweiten Zündeinheit (30a-g) durch seine Verbrennung freigegeben hat.

2. Verfahren nach Anspruch 1,
**dadurch gekennzeichnet,**
**dass** Abgase der Verbrennung des Festbrennstoffs (28) der zweiten Zündeinheit (30a-g) als Basebleed-Strom am Heck des Raketenmotors (4a-g) ausgeblasen werden.

3. Verfahren nach Anspruch 1 oder 2,
**dadurch gekennzeichnet,**
**dass** zwischen den beiden Teilkammern (14, 26) eine Trennwand (36a-f) mit einer Öffnung angeordnet ist, durch die der Festbrennstoff (18) der ersten Stufe (12a-f) den Festbrennstoff der zweiten Zündeinheit (30a-g) zündet.

4. Verfahren nach einem der vorhergehenden Ansprüche,
**dadurch gekennzeichnet,**
**dass** die zweite Zündeinheit (30a) bei Beginn des Abbrands der ersten Stufe (12a) gezündet wird.

5. Verfahren nach einem der Ansprüche 1 bis 3,
**dadurch gekennzeichnet,**
**dass** die zweite Zündeinheit (30b-g) so mit dem Festbrennstoff (18) der ersten Stufe (12b-f) verbunden ist, dass sie erst nach Ablauf einer vorbestimmten Brenndauer der ersten Stufe (12b-f) gezündet wird.

6. Verfahren nach einem der vorhergehenden Ansprüche,
**dadurch gekennzeichnet,**
**dass** die erste Stufe (12b-c) an ihrer Vorderseite eine Verzögerungspartition (46) aufweist, die noch abbrennt, während ein radialer Abbrand der ersten Stufe (12b-c) bereits beendet ist.

7. Verfahren nach einem der vorhergehenden Ansprüche,
**dadurch gekennzeichnet,**
**dass** der Zündzeitpunkt der zweiten Stufe (24f-g) durch einen Aktuator (48, 54) gesteuert wird, der die zweite Zündeinheit (30f-g) modifiziert.

8. Verfahren nach einem der vorhergehenden Ansprüche,
**dadurch gekennzeichnet,**
**dass** ein Aktuator (48, 54) eine Wandung (36f-g) um den Festbrennstoff der zweiten Zündeinheit (30f-g) öffnet und der Festbrennstoff (28) der zweiten Stufe durch diese Öffnung (52) gezündet wird.

9. Verfahren nach Anspruch 8,
**dadurch gekennzeichnet,**
**dass** die Öffnung (52) durch eine partielle Zerstörung der Wandung (36f-g) erfolgt.

10. Verfahren nach Anspruch 8 oder 9,
**dadurch gekennzeichnet,**
**dass** die Öffnung (52) durch eine Verschiebung der Wandung (36g) erzeugt wird.

11. Festbrennstoff-Raketenmotor (4a-g) mit einer Brennkammer (16), die eine erste Teilkammer (14) einer ersten Stufe (12a-f) und eine zweite Teilkammer (26) einer zweiten Stufe (24a-g) aufweist, die durch eine Trennwand (36) voneinander getrennt sind, eine erste Zündeinheit (22) zum Anzünden des Festbrennstoffs (18) der ersten Stufe (12a-f) und eine zweite Zündeinheit (30a-g) zum Anzünden des Festbrennstoffs (28) der zweiten Stufe (24a-g), die zweite Zündeinheit (30a-g) eine umwandete Durchbrandstrecke (44) aufweist, die einen Festbrennstoff enthält, der so ausgeführt ist, dass er den Festbrennstoff (28) der zweiten Stufe (24a-g) zündet,
**dadurch gekennzeichnet,**
**dass** die zweite Zündeinheit (30a-g) so zum Festbrennstoff (28) der zweiten Stufe angeordnet ist, dass Abgase der Verbrennung des Festbrennstoffs (28) der zweiten Stufe (24a-g) durch eine Öffnung blasen, die der Festbrennstoff (28) der zweiten Zündeinheit (30a-g) durch seine Verbrennung freigegeben hat.

12. Festbrennstoff-Raketenmotor nach Anspruch 11,
**dadurch gekennzeichnet,**
**dass** die zweite Zündeinheit (30a-g) einen Basebleed-Treibsatz als Verbindung zwischen den beiden Stufen (12a-f, 24a-g) aufweist.

13. Festbrennstoff-Raketenmotor nach Anspruch 11 oder 12,
**dadurch gekennzeichnet,**
**dass** die zweite Zündeinheit (30a-b, 30g) so zum Festbrennstoff (28) der zweiten Stufe (24a-b, 24g) angeordnet ist, dass sie durch ihren Abbrand eine Ausstoßöffnung für Abgase des Festbrennstoffs (28) der zweiten Stufe (24a-b, 24g) freigibt.

14. Festbrennstoff-Raketenmotor nach einem der Ansprüche 11 bis 13,
**dadurch gekennzeichnet,**
**dass** die zweite Zündeinheit (30a-b, 30g) zentral im Festbrennstoff (28) der zweiten Stufe (24a-b, 24g) angeordnet ist.

15. Festbrennstoff-Raketenmotor nach einem der Ansprüche 11 bis 14,
**dadurch gekennzeichnet,**
**dass** die zweite Stufe (24e-f) zumindest teilweise radial um die erste Stufe (12e-f) herumgeführt ist.

## Claims

1. Method for the two-stage burning of a solid-fuel rocket engine (4a-g), in which solid fuel (18) of a first stage (12a-f) in a first subchamber (14) of a combustion chamber (16) is ignited by a first ignition unit (22) and then solid fuel (28) of a second stage (24a-g) in a second subchamber (26) of the combustion chamber (16) is ignited by a second ignition unit (30a-g), a combustion of the first stage (12a-f) ignites the second ignition unit (30a-g), the second ignition unit (30a-g) burns through solid fuel in a walled burn-through section (44) and this fuel ignites the solid fuel of the second stage (24a-g),
**characterized**
**in that** exhaust gases of the combustion of the solid fuel (28) of the second stage (24a-g) blow through an opening which the solid fuel (28) of the second ignition unit (30a-g) has exposed by its combustion.

2. Method according to Claim 1,
**characterized**
**in that** exhaust gases of the combustion of the solid fuel (28) of the second ignition unit (30a-g) are blown out as a basebleed stream at the rear of the rocket engine (4a-g).

3. Method according to Claim 1 or 2,
**characterized**
**in that** a separating wall (36a-f) with an opening through which the solid fuel (18) of the first stage (12a-f) ignites the solid fuel of the second ignition unit (30a-g) is arranged between the two subchambers (14, 26).

4. Method according to one of the preceding claims, **characterized**
**in that** the second ignition unit (30a) is ignited at the beginning of the burning of the second stage (12a).

5. Method according to one of Claims 1 to 3, **characterized**
**in that** the second ignition unit (30b-g) is connected to the solid fuel (18) of the first stage (12b-f) in such a way that it is only ignited after the elapse of a predetermined burning time of the first stage (12b-f).

6. Method according to one of the preceding claims, **characterized**
**in that** the first stage (12b-c) has on its front side a delay partition (46), which is still burning while a radial burning of the first stage (12b-c) has already ended.

7. Method according to one of the preceding claims, **characterized**
**in that** the ignition timing of the second stage (24f-g) is controlled by an actuator (48, 54), which modifies the second ignition unit (30f-g).

8. Method according to one of the preceding claims, **characterized**
**in that** an actuator (48, 54) opens a wall (36f-g) around the solid fuel of the second ignition unit (30f-g) and the solid fuel (28) of the second stage is ignited through this opening (52).

9. Method according to Claim 8,
**characterized**
**in that** the opening (52) takes place by partial destruction of the wall (36f-g).

10. Method according to Claim 8 or 9,
**characterized**
**in that** the opening (52) is created by a displacement of the wall (36g).

11. Solid-fuel rocket engine (4a-g) with a combustion chamber (16), which has a first subchamber (14) of a first stage (12a-f) and a second subchamber (26) of a second stage (24a-g), which are separated from one another by a separating wall (36), a first ignition unit (22) for igniting the solid fuel (18) of the first stage (12a-f) and a second ignition unit (30a-g) for igniting the solid fuel (28) of the second stage (24a-g), the second ignition unit (30a-g) has a walled burn-through section (44), which contains a solid fuel which is designed in such a way that it ignites the solid fuel (28) of the second stage (24a-g),
**characterized**
**in that** the second ignition unit (30a-g) is arranged in relation to the solid fuel (28) of the second stage in such a way that exhaust gases of the combustion of the solid fuel (28) of the second stage (24a-g) blow through an opening which the solid fuel (28) of the second ignition unit (30a-g) has exposed by its combustion.

12. Solid-fuel rocket engine according to Claim 11, **characterized**
**in that** the second ignition unit (30a-g) has a basebleed propellant as a connection between the two stages (12a-f, 24a-g).

13. Solid-fuel rocket engine according to Claim 11 or 12, **characterized**
**in that** the second ignition unit (30a-b, 30g) is arranged in relation to the solid fuel (28) of the second stage (24a-b, 24g) in such a way that, by its burning, it exposes an emission opening for exhaust gases of the solid fuel (28) of the second stage (24a-b, 24g).

14. Solid-fuel rocket engine according to one of Claims 11 to 13,
**characterized**
**in that** the second ignition unit (30a-b, 30g) is arranged centrally in the solid fuel (28) of the second stage (24a-b, 24g).

15. Solid-fuel rocket engine according to one of Claims 11 to 14,
**characterized**
**in that** the second stage (24e-f) is at least partially led radially around the first stage (12e-f).

## Revendications

1. Procédé de combustion à deux étages d'un moteur-fusée à combustible solide (4a-g), procédé dans lequel le combustible solide (18) d'un premier étage (12a-f) est allumé dans une première partie de chambre (14) d'une chambre de combustion (16) à l'aide d'une première unité d'allumage (22), puis le combustible solide (28) d'un deuxième étage (24a-g) est allumé (30a-g) dans une deuxième partie de chambre (26) de la chambre de combustion (16) à l'aide d'une deuxième unité d'allumage, la deuxième unité d'allumage (30a-g) allume la combustion du premier étage (12a-f), la deuxième unité d'allumage (30a-g) brûle le combustible solide dans une section de combustion à parois (44) et celui-ci allume le combustible solide du deuxième étage (24a-g),
**caractérisé en ce que**
les gaz d'échappement dus à la combustion du combustible solide (28) du deuxième étage (24a-g) sont soufflés à travers une ouverture que le combustible solide (28) de la deuxième unité d'allumage (30a-g) a libérée par sa combustion.

2. Procédé selon la revendication 1,
**caractérisé en ce que**
les gaz d'échappement dus à la combustion du combustible solide (28) de la deuxième unité d'allumage (30a-g) sont soufflés sous la forme d'un écoulement d'évacuation par la base à l'arrière du moteur-fusée (4a-g).

3. Procédé selon la revendication 1 ou 2,
**caractérisé en ce que**
une cloison (36a-f), pourvue d'une ouverture par laquelle le combustible solide (18) du premier étage (12a-f) allume le combustible solide de la deuxième unité d'allumage (30a-g), est disposée entre les deux parties de chambre (14, 26).

4. Procédé selon l'une des revendications précédentes,
**caractérisé en ce que**
la deuxième unité d'allumage (30a) est allumée au début de la combustion du premier étage (12a).

5. Procédé selon l'une des revendications 1 à 3, **caractérisé en ce que**
la deuxième unité d'allumage (30b-g) est reliée au combustible solide (18) du premier étage (12b-f) de façon à ne s'allumer qu'après une période de combustion prédéterminée du premier étage (12b-f).

6. Procédé selon l'une des revendications précédentes,
**caractérisé en ce que**
le premier étage (12b-c) comporte sur son côté avant une cloison de retard (46) qui brûle encore alors qu'une combustion radiale du premier étage (12b-c) est déjà terminée.

7. Procédé selon l'une des revendications précédentes,
**caractérisé en ce que**
l'instant d'allumage du deuxième étage (24f-g) est commandé par un actionneur (48, 54) qui modifie la deuxième unité d'allumage (30f-g).

8. Procédé selon l'une des revendications précédentes,
**caractérisé en ce que**
un actionneur (48, 54) ouvre une paroi (36f-g) autour du combustible solide de la deuxième unité d'allumage (30f-g) et le combustible solide du deuxième étage (28) est allumé par cette ouverture (52).

9. Procédé selon la revendication 8,
**caractérisé en ce que**
l'ouverture (52) est réalisée par destruction partielle de la paroi (36f-g).

10. Procédé selon la revendication 8 ou 9,
**caractérisé en ce que**
l'ouverture (52) est réalisée par coulissement de la paroi (36g).

11. Moteur-fusée à combustible solide (4a-g) comprenant une chambre de combustion (16), qui comporte une première partie de chambre (14) d'un premier étage (12a-f) et une deuxième partie de chambre (26) d'un deuxième étage (24a-g) qui sont séparées l'une de l'autre par une cloison (36), une première unité d'allumage (22) destinée à allumer le combustible solide (18) du premier étage (12a-f) et une deuxième unité d'allumage (30a-g) destinée à allumer le combustible solide (28) du deuxième étage (24a-g), la deuxième unité d'allumage (30a-g) comportant une section de combustion à parois (44) qui contient un combustible solide qui est conçu pour allumer le combustible solide (28) du deuxième étage (24a-g), **caractérisé en ce que**
la deuxième unité d'allumage (30a-g) est disposée par rapport au combustible solide du deuxième étage (28) de sorte que les gaz d'échappement dus à la combustion du combustible solide (28) du deuxième étage (24a-g) sont soufflés par une ouverture que le combustible solide (28) de la deuxième unité d'allumage (30a-g) a libérée par sa combustion.

12. Moteur-fusée à combustible solide selon la revendication 11,
**caractérisé en ce que**
la deuxième unité d'allumage (30a-g) comporte un ensemble de propulsion à évacuation par la base comme liaison entre les deux étages (12a-f, 24a-g).

13. Moteur-fusée à combustible solide selon la revendication 11 ou 12,
**caractérisé en ce que**
la deuxième unité d'allumage (30a-b, 30g) est disposée par rapport au combustible solide (28) du deuxième étage (24a-b, 24g) de façon à libérer par la combustion de celui-ci une ouverture d'éjection de gaz d'échappement du combustible solide (28) du deuxième étage (24a-b, 24g).

14. Moteur-fusée à combustible solide selon l'une des revendications 11 à 13,
**caractérisé en ce que**
la deuxième unité d'allumage (30a-b, 30g) est disposée au centre du combustible solide (28) du deuxième étage (24a-b, 24g).

15. Moteur-fusée à combustible solide selon l'une des revendications 11 à 14,
**caractérisé en ce que**
le deuxième étage (24e-f) est guidé au moins en partie radialement autour du premier étage (12e-f).
